# EUROPEAN PATENT APPLICATION

(11) **EP 2 451 142 A1**
(43) Date of publication of application: **09.05.2012**
(21) Application number: 11185099.6
(22) Date of filing: 13.10.2011
(51) Int. Cl.: H04M 1/725

(54) **Electronic apparatus and computer program for controlling operations on the basis of signals from sensors**

(30) Priority: 05.11.2010 JP 2010248004
(71) Applicant: Fujitsu Limited, Kawasaki-shi, Kanagawa 211-8588 (JP)
(72) Inventor: Kasama, Kouichirou, Kawasaki-shi, Kanagawa 211-8588 (JP)
(74) Representative: Stebbing, Timothy Charles

(57) **Abstract**

An electronic apparatus (100) that receives a signal from a sensor device (100A), the electronic apparatus having: an environmental signal acquiring unit (100B) that acquires an environmental signal at specific sampling intervals, the environmental signal being input from the sensor device (100A); an environmental signal storage unit (100C) that stores the acquired environmental signal until at least a next sampling interval comes; a differential amount acquiring unit (100D) that acquires a differential amount between samples of the environmental signal ; and an operation selecting unit (100E) that selects a to-be-activated operation based on the acquired differential amount. The electronic apparatus may be a mobile phone for example.

## Description

This application is related to and claims priority of Japanese Patent Application No. 2010-248004 filed on November 5, 2010.

The present invention relates to a technique for controlling operations of electronic apparatuses based on signals from sensors.

Techniques for switching between operations of electronic apparatuses based on signals acquired from sensors have been proposed.

Japanese Laid-open Patent Publication No. 2000-184013 discloses a mobile phone apparatus including a camera for image capturing. More specifically, a technique for detecting an ambient luminance level from an image-capturing signal acquired by the camera and adjusting ring volume in accordance with the luminance level in the mobile phone apparatus is disclosed. For example, the following control example has been proposed. When the luminance level detected from the image-capturing signal is lower than a predetermined fixed reference value, the ring volume is raised. In contrast, when the luminance level is equal to or higher than the predetermined fixed reference value, the ring volume is lowered.

Japanese Laid-open Patent Publication No. 2008-5253 discloses an image capturing apparatus that switches between and activates different operations based on image information resulting from image capturing. The image capturing apparatus includes a table in which operation information indicating a to-be-activated operation is previously set in association with image information, such as expected color and luminance of a subject. As examples of the image information resulting from image capturing, information such as luminance information indicating a luminance value acquired from a captured image of a subject, color-difference information, information on shape of the subject, is illustrated in this publication. Additionally, operations, such as a setting operation of the image-capturing apparatus, a diagnosis operation for diagnosing a failure in each unit of the image-capturing apparatus, a reset operation for returning various setting values set in the image-capturing apparatus to an initial state, and an adjustment operation for adjusting a reference value for adjusting an optical system included in the image-capturing apparatus, are illustrated as examples of the different operations.

Embodiments disclosed herein may provide an electronic apparatus that receives a signal from a sensor device, the electronic apparatus comprising: an environmental signal acquiring unit to acquire an environmental signal at specific sampling intervals, the environmental signal being input from the sensor device; an environmental signal storage unit to store the acquired environmental signal until at least a next sampling interval comes; a differential amount acquiring unit to acquire a differential amount that is a difference between samples of the environment signal; and an operation selecting unit to select a to-be-activated operation based on the acquired differential amount. The differential amount may be, more specifically, a difference between a first environmental signal and a second environmental signal, the first environmental signal being the acquired environmental signal, the second environmental signal being the environmental signal that is acquired before the first environmental signal is acquired by the environmental signal acquiring unit and is stored in the environmental signal storage unit.
Reference is made, by way of example only, to the accompanying drawings in which:

FIG. 1 illustrates a functional configuration of an electronic apparatus according to a first embodiment.

FIG. 2 illustrates a functional configuration of an electronic apparatus according to a second embodiment.

FIG. 3 illustrates an example of content of a correspondence table.

FIG. 4 illustrates a functional configuration of an electronic apparatus according to a third embodiment.

FIG. 5 illustrates an example of content of a correspondence table in the third embodiment.

FIG. 6 illustrates an example of content of a destination table in the third embodiment.

FIG. 7 illustrates a functional configuration of an electronic apparatus according to a fourth embodiment.

FIG. 8 illustrates an example of content of a correspondence table in the fourth embodiment.

FIG. 9 illustrates a configuration of an electronic apparatus according to a fifth embodiment.

FIG. 10 illustrates an example of content of a destination table in the fifth embodiment.

FIG. 11 illustrates an example of content of a correspondence table in the fifth embodiment.

In accordance with embodiments of the present invention, an operation that is potentially activated can be selected in accordance with an amount of a change in an environment signal (environmental or ambient signal), which changes as time passes. It is possible to effectively suppress an influence of a variation of the steady-state output level of the sensor in each use environment of the electronic apparatus by focusing on the amount of the change in the environment signal.

In the related art, unlike the embodiments of the present invention, a signal acquired from a sensor is compared with a predetermined reference value. For example, in Japanese Laid-open Patent Publication No. 2000-184013, it is determined whether a luminance level acquired from the sensor is lower than a predetermined fixed reference value in order to detect that a mobile phone apparatus is stored in a bag or a pocket of cloths. Such a technique may unfortunately induce a detection error when a steady state output level of the sensor varies in each use environment. More specifically, when electronic apparatuses are used in an environment different from a previously expected one in which the reference value is set, a detection error is likely to occur. For example, when an electronic apparatus whose reference value is set based on an assumption of indoor use is used outdoor, the detection error may frequently occur. If users are required to perform an operation for switching the reference value depending on the use environment to solve this problem, convenience of the electronic apparatus is damaged and client attraction to the product will be increasingly decreased. Additionally, setting the reference value generally applied to various use environments is generally difficult and may create design/development load.

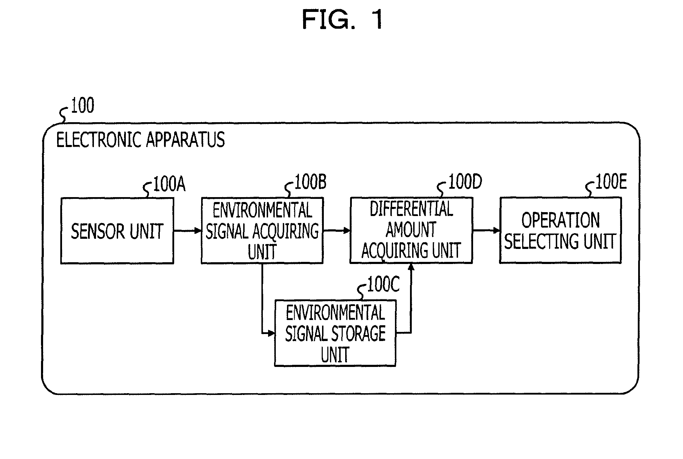

(First Embodiment) With reference to Fig. 1, a functional configuration of an electronic apparatus is provided in which a first embodiment of the present invention may be implemented. An electronic apparatus 100 illustrated in FIG. 1 includes a sensor unit 100A, an environmental signal acquiring unit 100B, an environmental signal storage unit 100C, a differential amount acquiring unit 100D, and an operation selecting unit 100E.

The sensor unit 100A is a component that converts physical information into an electric signal using a specified detection principle, such as a camera module using an element that detects light and generates a charge and a microphone that converts sound propagating through air into an electric signal. In this embodiment, an example of using the camera module as the sensor unit 100A will be described. The sensor unit 100A supplies the environmental signal acquiring unit 100B with an environmental signal indicating information on intensity of ambient light (e.g., a luminance level) and an attribute of color (e.g., color phase, brightness, and color saturation) based on charge stored by the photoelectric effect in response to reception of light. The environmental signal in this embodiment may be changed accordingly depending on types of the sensor. For example, when a microphone is used as the sensor unit 100A, information on an attribute of sound, such as volume of an acoustic signal acquired from the microphone, can be used as the environmental signal.

The environmental signal acquiring unit 100B acquires the environmental signal supplied from the sensor unit 100A at, for example, specified sampling intervals. The environmental signal acquiring unit 100B supplies the acquired environmental signal (i.e., a first environmental signal) to the environmental signal storage unit 100C and the differential amount acquiring unit 100D.

The environmental signal storage unit 100C is a storage device for storing the supplied environmental signal. The environmental signal storage unit 100C stores the environmental signal supplied from the environmental signal acquiring unit 100B and then supplies the stored environmental signal (i.e., a second environmental signal) to the differential amount acquiring unit 100D, for example, at a next sampling interval. That is, the environmental signal storage unit 100C in this embodiment functions as a delay. Alternatively, the environmental signal storage unit 100C may supply the differential amount acquiring unit 100D with an average of the environmental signal acquired based on the environmental signals of several past sampling intervals.

The differential amount acquiring unit 100D acquires a differential amount between the first environmental signal, i.e., the environmental signal supplied from the environmental signal acquiring unit 100B, and the second environmental signal, i.e., the environmental signal supplied from the environmental signal storage unit 100C. The differential amount acquiring unit 100D then supplies the differential amount to the operation selecting unit 100E.

Based on the supplied differential amount, the operation selecting unit 100E selects an operation that is potentially activated (i.e., a to-be-activated operation). For example, the operation selecting unit 100E compares the supplied differential amount with a specified reference value. When it is determined that the differential amount exceeds the reference value, the operation selecting unit 100E activates a specified operation. Further, the operation selecting unit 100E starts recording a detection signal supplied from, for example, a second sensor unit, not illustrated, when the luminance level indicated by the environmental signal supplied from the environmental signal acquiring unit 100B drops from the level of the last sampling interval by a specified amount or more.

With the above configuration, the electronic apparatus according to this embodiment can take action according to an amount of a change in the environmental signal that changes as time passes. In this embodiment, it is possible to effectively suppress an influence of a variation of a static level in each use environment of the electronic apparatus by focusing on the amount of the change in the environmental signal.

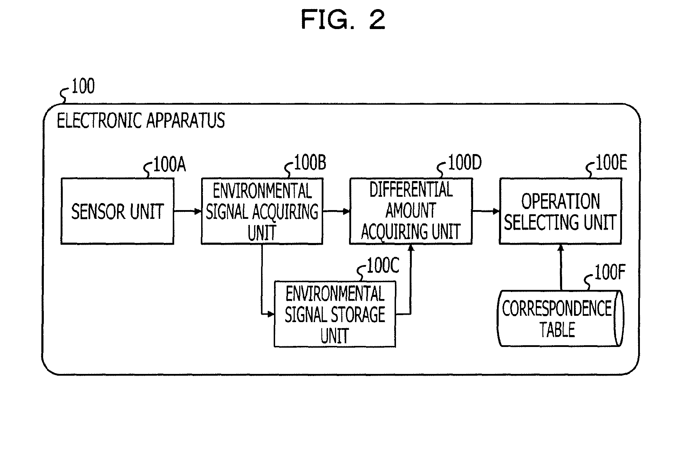

(Second Embodiment) With reference to Fig. 2, a functional configuration of an electronic apparatus is provided in which a second embodiment of the present invention may be implemented. In an electronic apparatus 100 illustrated in FIG. 2, similar reference numerals represent substantially similar components in the electronic apparatus according to the first embodiment illustrated in FIG. 1. The electronic apparatus 100 illustrated in FIG. 2 additionally includes, for example, a correspondence table 100F. An operation selecting unit 100E of this embodiment refers to content of the correspondence table 100F when selecting a to-be-activated operation based on a differential amount supplied from a differential amount acquiring unit 100D.

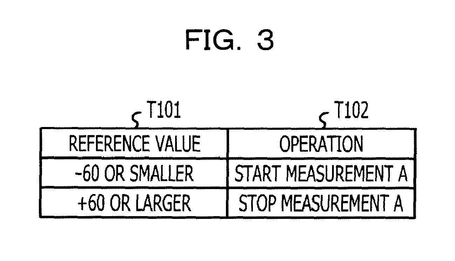

FIG. 3 illustrates an example of the content of the correspondence table 100F. In the example content of the correspondence table 100F illustrated in FIG. 3, a reference value T101 and an operation T102 are included as an example. In the example of FIG. 3, for example, a reference value "-60 or smaller" is set in association with an operation "start measurement A", whereas a reference value "+60 or larger" is set in association with an operation "stop measurement A". When a differential amount acquired in the differential amount acquiring unit 100E by subtracting, from a luminance level indicated by an environmental signal (i.e., a first environmental signal) supplied from an environmental signal acquiring unit 100B, a luminance level indicated by an environmental signal previously supplied (i.e., a second environmental signal) (e.g., at least one sampling-interval before) is "-60 or smaller" (e.g., when the differential amount is -70), the operation selecting unit 100E selects the operation "start measurement A" as the to-be-activated operation. For example, when the differential amount obtained in the differential amount acquiring unit 100D by subtracting, from the luminance level indicated by the environmental signal (i.e., the first environmental signal) supplied from the environmental signal acquiring unit 100B, the luminance level indicated by the environmental signal previously supplied (i.e., the second environmental signal) is "+60 or larger" (e.g., when the differential amount is +70), the operation selecting unit 100E selects the operation "stop measurement A" as the to-be-activated operation. In the example illustrated in FIG. 3, the reference values "+60 or larger" and "-60 or smaller" indicate a criteria of luminance values represented in 256 gray levels. That is, the reference value T101 of the correspondence table 100F is accordingly changed depending on a specification of content indicated by the environmental signal. Additionally, in the content example illustrated in FIG. 3, "measurement A" indicates, for example, processing for recording a detection signal supplied from a second sensor unit, not illustrated. More specifically, "start measurement A" indicates to start recording the detection signal, whereas "stop measurement A" indicates to stop recording of the detection signal.

For example, when the luminance level changes from "255" indicating a brightest state outdoor in the daytime to "185" because a user stores the electronic apparatus in a pocket of their clothes made of thin material, the differential amount is equal to -70 (= 185-255). In such a case, "start measurement A" in the content example illustrated in FIG. 3 is selected with the above configuration. Additionally, when the luminance level changes from "185" indicating a relatively low outdoor luminance level to "115" because the user stores the electronic apparatus in a pocket of their clothes made of thick material, the differential amount is equal to -70 (= 115 - 185). In such a case, "start measurement A" in the content example illustrated in FIG. 3 is selected. On the other hand, when the original luminance level is detected because the user pulls out the electronic apparatus stored in the pocket, the differential amount is equal to +70 (= 255 - 185 or = 185 - 115). In such a case, "stop measurement A" in the content example illustrated in FIG. 3 is selected. In this way, it is possible to effectively suppress an influence of a variation of a static level in each use environment of the electronic apparatus, such as indoor and outdoor, by focusing on the change in the environmental signal.

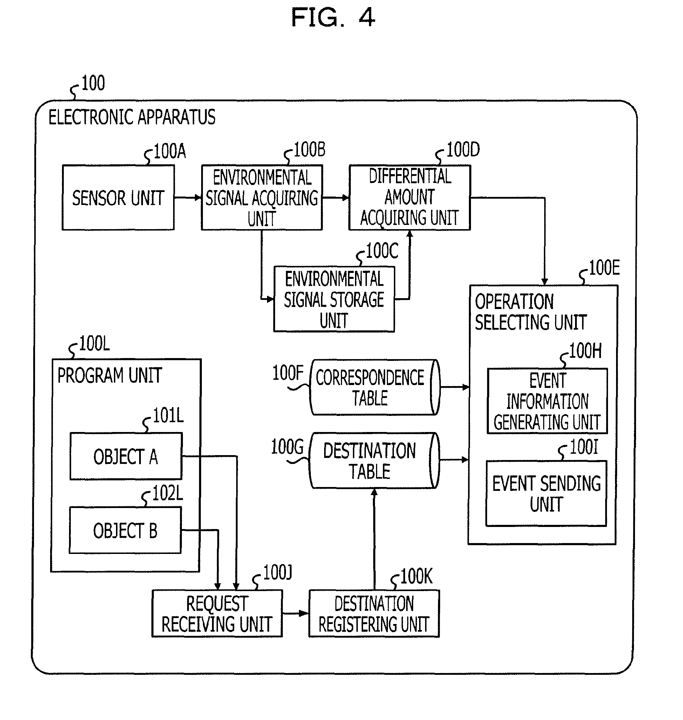

(Third Embodiment) With reference to Fig. 4, a functional configuration of an electronic apparatus is provided in which a third embodiment of the present invention may be implemented. In an electronic apparatus 100 illustrated in FIG. 4, similar reference numerals represent substantially similar components in the electronic apparatuses according to the first and second embodiments illustrated in FIGs. 1 and 2, respectively. For example, a destination table 100G, an event information generating unit 100H, an event sending unit 100I, a request receiving unit 100J, a destination registering unit 100K, and a program unit 100L are newly added in the electronic apparatus 100 illustrated in Fig. 4.

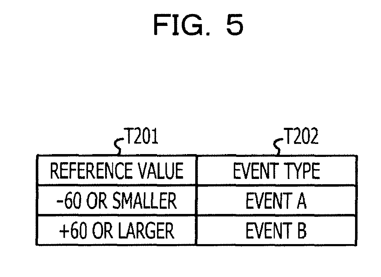

A correspondence table 100F of this embodiment does not directly set a to-be-activated operation in association with a specified reference value but sets an event type, which is more abstract than the operation, in association with the reference value. FIG. 5 illustrates an example of content of the correspondence table 100F in the third embodiment. In the example of the content illustrated in FIG. 5, a reference value "-60 or smaller" is set in association with an event type "event A", whereas a reference value "+60 or larger" is set in association with an event type "event B". In this way, the electronic apparatus 100 may not uniquely specify the to-be-activated operation based on the content of an event type T202 of the correspondence table 100F. In that context, the correspondence is more abstract in the correspondence table 100F in the third embodiment than the correspondence table 100F in the second embodiment.

An operation selecting unit 100E in the third embodiment compares a differential amount supplied from a differential amount acquiring unit 100D with a reference value T201 that is referred to based on the content of the correspondence table 100F. The operation selecting unit 100E selects the event type T202 associated with the reference value whose relation with the differential amount satisfies a condition. The operation selecting unit 100E then supplies the event type to the event information generating unit 100H. For example, when a luminance level changes from "255" indicating a brightest state outdoor in the daytime to "185" because a user stores the electronic apparatus in a pocket of their clothes made of thin material, the differential amount is equal to -70 (= 185 - 255). In such a case, "event A" in the content example illustrated in FIG. 5 is selected.

The event information generating unit 100H generates event information indicating that a detection-target event is detected based on the supplied event type. The event information generating unit 100H may be supplied with various kinds of information, by the operation selecting unit 100E, such as the differential amount originally from the differential amount acquiring unit 100D and the reference value originally from the correspondence table 100F, in addition to the event type, and may include those various kinds of information in the event information.

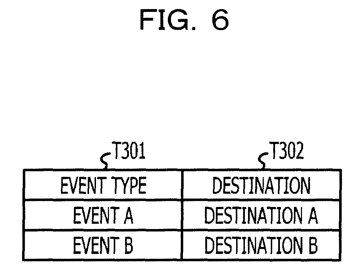

The event sending unit 100I is supplied with the event information generated by the event information generating unit 100H and selects a destination corresponding to the event type indicated by the event information with reference to content of the destination table 100G. FIG. 6 illustrates an example of content of the destination table 100G in the third embodiment. The content example illustrated in FIG. 6 includes an event type T301 and a destination T302. An event type "event A" is set in association with a destination "destination A", whereas an event type "event B" is set in association with a destination "destination B". For example, upon being supplied with "event A" from the event information generating unit 100H, the event sending unit 100I selects "destination A" as the destination corresponding to "event A". The event sending unit 100I then sends the event information to a destination specified by the selected destination "destination A".

It is assumed that "destination A" and "destination B" correspond to an object A 101L and an object B 102L in the program unit 100L, respectively, in the example of the functional configuration illustrated in FIG. 4. Referring to FIG. 4, the program unit 100L represents a logical functional unit realized by an arithmetic unit that executes a specified instruction sequence, for example. The object A lOlL and the object B 102L are functional components executed by the arithmetic unit included in the electronic apparatus 100 and correspond to an abstract representation of specified processing. For example, the object A and the object B correspond to instances of objects in application software, such as a web browser and measurement software, and functions that define specified processing. The program unit 100L (more specifically, the object A lOlL and the object B 102L) in this embodiment is not limited to a program constructed with an object-oriented language. Additionally, in this embodiment, the object A 101L or the object B 102L correspond to specified operations to be activated by the operation selecting unit 100E based on the differential amount. Additionally, the object A 101L and the object B 102L may be executed as different processes that are independent from each other in the arithmetic unit of the electronic apparatus 100 or may be executed in specified processing units, such as in units of threads, in a common process.

The event information sent from the event sending unit 100I is delivered to a specified functional unit in the program unit 100L specified by a destination T302 registered in the destination table 100G using an available technology, such as interprocess communication. In the aforementioned example, the event information "event A" is sent to "destination A", thereby being delivered to the object A. Similarly, the event information of "event B" is sent to "destination B", thereby being delivered to the object B. The destination T302 of the destination table 100G may be identification information (e.g., a process ID or an object ID) specifying each final-destination functional unit (such as the object A or the object B) in the program unit 100L or may be identification information specifying a logical communication path established between each functional unit in the program unit 100L and the event sending unit 100I.

The request receiving unit 100J and the destination registering unit 100K will now be described. The request receiving unit 100J receives a request from each functional unit in the program unit 100L, whereas the destination registering unit 100K registers information in the destination table 100G.

For example, when a request for detecting a specified event based on an environmental signal supplied from a sensor unit 100A is made in the process of execution of the object A 101L, the object A 101L sends a request for registering a destination to the request receiving unit 100J at given timing. The registration request includes an event type for specifying a detection-target event. Additionally, the registration request may include information for specifying processing to be activated when the detection-target event is detected.

Upon receiving the request from the object A 101L, the request receiving unit 100J supplies the destination registering unit 100K with information for specifying the object having sent the request (i.e., a request source object) and the event type for specifying the detection-target event. The information for specifying the object having sent the request may be identification information (e.g., a process ID, an object ID, or a function pointer) for specifying a final-destination functional unit (e.g., the object A) in the program unit 100L or may be identification information for specifying a logical communication path established between the functional unit in the program unit 100L and the event sending unit 100I. Additionally, information for specifying processing to be activated when the detection-target event included in the registration request is detected may be used as the information for specifying the object having sent the request.

The destination registering unit 100K registers destination information in the destination table 100G based on the various kinds of supplied information. For example, the destination registering unit 100K sets the event type supplied from the request receiving unit 100J in the event type T301 and sets the information for specifying the object having sent the request in the destination T302.

With the above configuration, for example, when a luminance level changes from "255" indicating a brightest state outdoor in the daytime to "185" because a user stores the electronic apparatus in a pocket of their clothes made of thin material, a differential amount is equal to -70 (= 185 - 255). Accordingly, "event A" in the content example illustrated in FIG. 5 is selected. Additionally, when the luminance level changes from "185" indicating a relatively low outdoor luminance level to "115" because the user stores the electronic apparatus in a pocket of their clothes made of thick material, the differential amount is equal to -70 (= 115 - 185). In such a case, "event A" in the content example illustrated in FIG. 5 is selected. In this way, "event A" is selected in either case regardless of a variation in a static level in each use environment of the electronic apparatus, such as indoor or outdoor. In addition, when the original luminance level is detected because the user pulls out the electronic apparatus stored in the pocket, the differential amount is equal to +70 (= 255 - 185 or = 185 - 115). In such a case, "event B" in the content example illustrated in FIG. 5 is selected. In this way, it is possible to effectively suppress an influence of a variation in the static level in each use environment of the electronic apparatus, indoor or outdoor. The "object A" identified by "destination A" selected for "event A" is a functional unit that functions to "start measurement A", for example. The "object B" identified by "destination B" selected for "event B" is a functional unit that functions to "stop measurement A", for example.

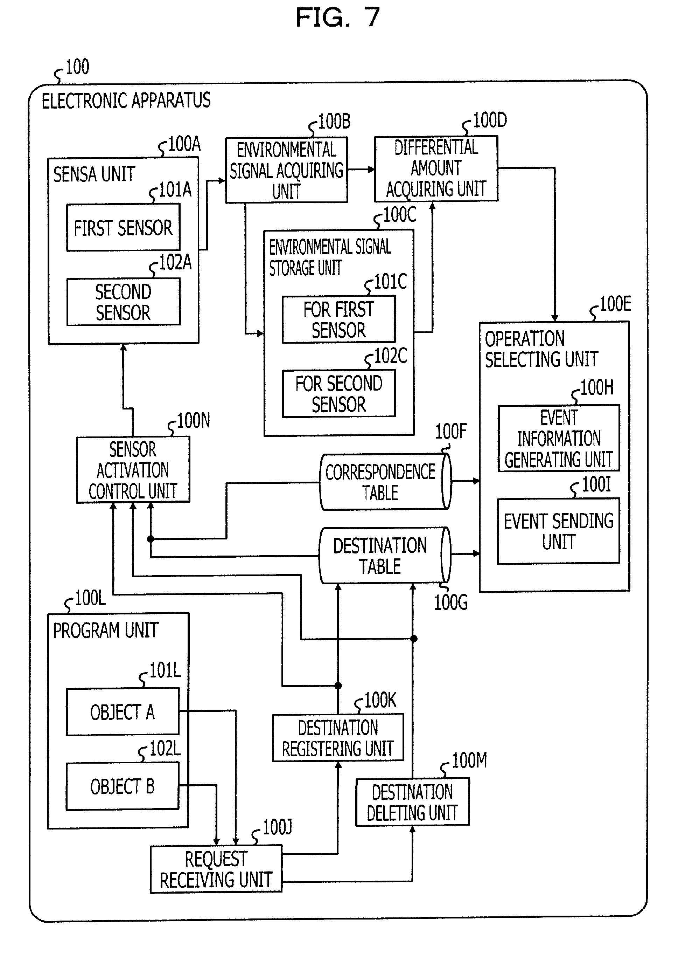

(Fourth Embodiment) With reference to Fig. 7, a functional configuration of an electronic apparatus is provided in which a fourth embodiment of the present invention may be implemented. In an electronic apparatus 100 illustrated in FIG. 7, similar reference numerals represent substantially similar components in the electronic apparatus according to the third embodiment illustrated in FIG. 4. For example, a destination deleting unit 100M, a sensor activation control unit 100N, a first sensor 101A, a second sensor 102A, and a first sensor environmental signal storage section 101C, and a second sensor environmental signal storage section 102C are newly added.

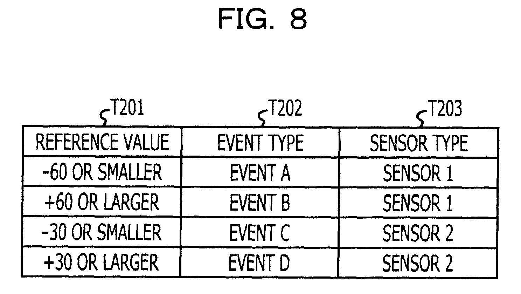

Furthermore, a sensor type T203 is newly added in a correspondence table 100F of this embodiment. FIG. 8 illustrates an example of content of the correspondence table 100F according to the fourth embodiment. In the content example illustrated in FIG. 8, a reference value "-60 or smaller" is set in association with an event type "event A" and a sensor type "sensor 1", whereas a reference value "+60 or larger" is set in association with an event type "event B" and a sensor type "sensor 1". Additionally, a reference value "-30 or smaller" is set in association with an event type "event C" and a sensor type "sensor 2", whereas a reference value "+30 or larger" is set in association with an event type "event D" and a sensor type "sensor 2".

An operation of the sensor activation control unit 100N will now be described. The sensor activation control unit 100N according to this embodiment executes a specified operation in response to reception of an instruction from a destination registering unit 100K. The destination registering unit 100K of this embodiment registers information in a destination table 100G based on various kinds of information supplied from a request receiving unit 100J as in the operation according to the third embodiment. Furthermore, the destination registering unit 100K of this embodiment supplies an instruction for executing activation processing to the sensor activation control unit 100N based on the various kinds of information supplied from the request receiving unit 100J. Content of the instruction supplied to the sensor activation control unit 100N may include, for example, an event type that specifies a detection-target event or the instruction may simply notify the sensor activation control unit 100N that the destination table 100G is updated.

Upon receiving the notification from the destination registering unit 100K, the sensor activation control unit 100N executes processing for selecting a to-be-activated sensor. For example, when the notification from the destination registering unit 100K includes the event type that specifies the detection-target event, the sensor activation control unit 100N selects the sensor type T203 corresponding to the event type based on the content of the correspondence table 100F. More specifically, when the event type included in the notification from the destination registering unit 100K is "event A", "sensor 1" is selected based on the content example illustrated in FIG. 8.

Alternatively, the sensor activation control unit 100N may select the event type T301 for which the destination T302 is registered with reference to the content of the destination table 100G and then select the sensor type T203 corresponding to the event type based on the content of the correspondence table 100F. For example, when the event types selected based on the content of the destination table 100G are "event A" and "event B", "sensor 1" is selected based on the content example illustrated in FIG. 8.

The sensor activation control unit 100N activates a sensor specified by the selected sensor type. The electronic apparatus 100 according to the fourth embodiment illustrated in FIG. 7 includes the first sensor 101A and the second sensor 102A as a sensor unit 100A. Here, the first sensor 101A corresponds to the sensor type "sensor 1", whereas the second sensor 102A corresponds to the sensor type "sensor 2". For example, when the selected sensor type is "sensor 1", the sensor activation control unit 100N activates the first sensor 101A. As a result, an environmental signal from the first sensor 101A is supplied to an environmental signal acquiring unit 100B.

With the above configuration, once an object A 101L sends a request specifying a detection-target event to the request receiving unit 100J, the sensor corresponding to the event is activated and the sensor starts supplying the environmental signal therefrom.

An operation of an operation selecting unit 100E in this embodiment will now be described. The operation selecting unit 100E in this embodiment executes a specified operation in response to reception of a differential amount supplied from a differential amount acquiring unit 100D as in the first embodiment. The operation selecting unit 100E of this embodiment is supplied with the sensor type indicating a source of an environmental signal, based on which the aforementioned differential amount is calculated. For example, the operation selecting unit 100E is supplied with the sensor type "sensor 1" in association with the differential amount of the environmental signal supplied from the first sensor 101A. Additionally, a storage area for storing an environmental signal for each environmental-signal supplying sensor is set in the environmental signal storage unit 100C in this embodiment. For example, when supplying the environmental signal fed from a sensor unit 100A to the environmental signal storage unit 100C, an environmental signal acquiring unit 100B of this embodiment controls the environmental signal storage unit 100C so that the storage area differs for each environmental-signal supplying sensor. Additionally, for example, when supplying the environmental signal fed from the sensor unit 100A to the differential amount acquiring unit 100D, the environmental signal acquiring unit 100B of this embodiment controls the environmental signal storage unit 100C so that the environmental signal (i.e., a second environmental signal) in the storage area corresponding to the source of the environmental signal is output from the environmental signal storage unit 100C.

The operation selecting unit 100E selects a to-be-activated operation based on the supplied differential amount and sensor type. For example, the operation selecting unit 100E selects a reference value T201 corresponding to the supplied sensor type with reference to the content of the correspondence table 100F. In the content example illustrated in FIG. 8, when the supplied sensor type is "sensor 1", "-60 or smaller" and "+60 or larger" are selected as the reference value T201 corresponding to the sensor type. The operation selecting unit 100E compares the selected reference value with the supplied differential amount. The operation selecting unit 100E then selects an event type T202 associated with the reference value whose relation with the differential amount satisfies a condition. For example, when a luminance level changes from "255" indicating a brightest state outdoor in the daytime to "185" because a user stores the electronic apparatus in a pocket of their clothes made of thin material, the differential amount is equal to -70 (= 185 - 255). In such a case, "event A" in the content example illustrated in FIG. 8 is selected. Since following operations of an event information generating unit 100H and an event sending unit 100I are similar to those in the third embodiment, a description thereof is omitted.

Other operations of the sensor activation control unit 100N will now be described. The sensor activation control unit 100N of this embodiment executes a specified operation in response to reception of an instruction from the destination deleting unit 100M, for example. The destination deleting unit 100M of this embodiment receives a request from a functional unit (e.g., the object A 101L) in the program unit 100L through the request receiving unit 100J and deletes information from the destination table 100G. For example, when detection of a specified event based on an environmental signal from the sensor unit 100A is no longer needed in process of execution of the object A 101L, the object A 101L sends a delete request to the request receiving unit 100J at given timing. The delete request includes the event type for specifying a deletion-target event. Upon receiving the request from the object A 101L, the request receiving unit 100J supplies the destination deleting unit 100M with information for specifying the object having been sent the request (i.e., a request source object) and the event type for specifying the deletion-target event. The information for specifying the object having sent the request may be identification information (e.g., a process ID or an object ID) for specifying each final-destination functional unit (e.g., the object A) in the program unit 100L or may be identification information specifying a logical communication path established between each functional unit in the program unit 100L and the event sending unit 100I. The destination deleting unit 100M deletes the information specified based on the various kinds of supplied information from the destination table 100G. The content example of the destination table illustrated in FIG. 6 is valid also in this embodiment. For example, when the information specifying the object having sent the request indicates "the object A 101L" and the event type specifying the deletion-target event indicates "event A", information associating the event type "event A" with a destination "destination A" is deleted from the destination table 100G in the content example illustrated in FIG. 6. It is also assumed in this embodiment that "destination A" corresponds to the object A 101L in the program unit 100L.

Furthermore, the destination deleting unit 100M supplies the sensor activation control unit 100N with an instruction for executing stop processing based on various kinds of information supplied from the request receiving unit 100J. Content of the instruction supplied to the sensor activation control unit 100N may include, for example, the event type that specifies the deletion-target event or may simply notify the sensor activation control unit 100N that the destination table 100G is updated.

Upon receiving the notification from the destination deleting unit 100M, the sensor activation control unit 100N executes processing for selecting a to-be-stopped sensor. For example, when the notification from the destination deleting unit 100M includes the event type that specifies the delete-target event, the sensor activation control unit 100N determines whether the event type is effectively registered in association with another destination with reference to the destination table 100G. When the effectively registered destination exists, the sensor activation control unit 100N terminates the stop processing. That is, the environmental signal is continuously supplied from the sensor. In contrast, when the destination associated with the event type is no longer effectively registered, the sensor activation control unit 100N selects the sensor type T203 corresponding to the event type based on the content of the correspondence table 100F. For example, when the event type included in the notification from the destination registering unit 100K is "event A", "sensor 1" is selected in the content example illustrated in FIG. 8.

The sensor activation control unit 100N then selects another event type corresponding to the selected sensor with reference to the content of the correspondence table 100F. For example, it is assumed that "event B" is selected as the other event type corresponding to "sensor 1" in the content example in FIG. 8. Here, the other event type equates to an event type other than the one notified by the destination deleting unit 100M. The sensor activation control unit 100N confirms that the destination corresponding to the selected event type is no longer effectively registered with reference to the destination table 100G. When the effectively registered destination exists, the sensor activation control unit 100N terminates the stop processing. That is, the environmental signal is continuously supplied from the sensor. In contrast, when the destination is no longer effectively registered, the sensor activation control unit 100N terminates the sensor corresponding to the selected sensor type. As a result, supply of the environmental signal from the sensor stops.

With the above configuration, for example, once the object A 101L sends a request specifying a deletion-target event to the request receiving unit 100J, the sensor corresponding to the event is stopped and supply of the environmental signal from the sensor stops.

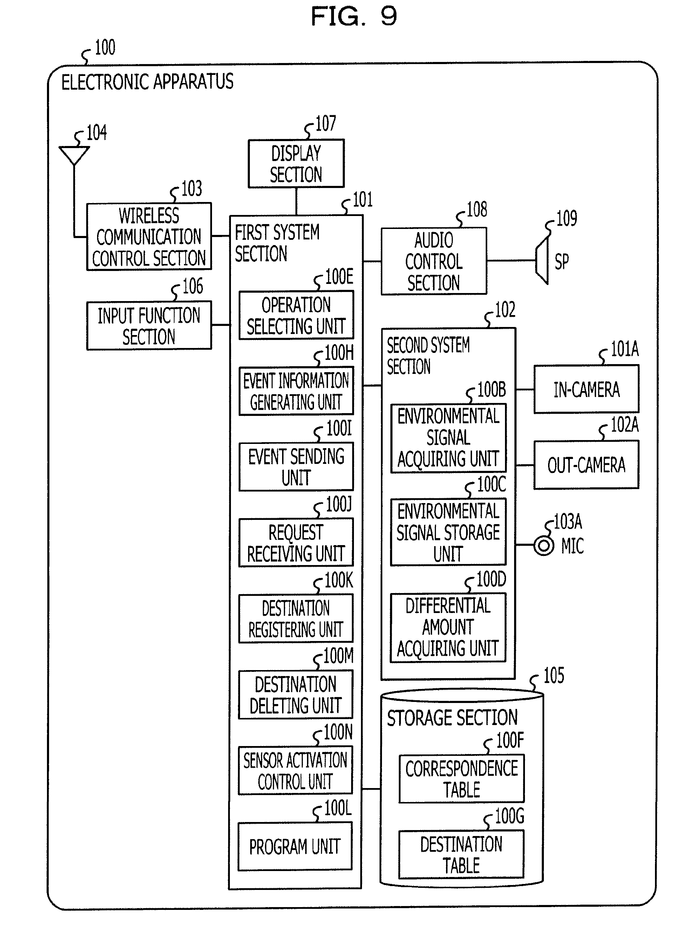

(Fifth Embodiment) With reference to Fig. 9, a configuration of an electronic apparatus is provided in which a fifth embodiment of the present invention may be implemented. In an example illustrated in FIG. 9, similar reference numerals represent substantially similar components of the electronic apparatuses according to the first, second, third, and fourth embodiments illustrated in Figs. 1, 2, 4, and 7, respectively.

The electronic apparatus 100 illustrated in FIG. 9 is an information processing apparatus having a telephone function or a mobile phone apparatus including a first system section 101, a second system section 102, a wireless communication control section 103, an antenna 104, a storage section 105, an input function section 106, a display section 107, an audio control section 108, and a receiver 109.

The first system section 101 is connected to each section, such as the second system section 102, the wireless communication control section 103, the storage section 105, the input function section 106, the display section 107, or the audio control section 108, through various transmission paths, such as a bus, to be able to communicate with the section. The first system section 101 has functions, such as controlling an operation of each section and executing a specified process after receiving an operation result from each section. Additionally, the first system section 101 illustrated in FIG. 9 has an arithmetic function for executing a process defined by a software program. The first system section 101 includes, as functional configurations thereof, an operation selecting unit 100E, an event information generating unit 100H, an event sending unit 100I, a request receiving unit 100J, a destination registering unit 100K, a destination deleting unit 100M, and a sensor activation control unit 100N. Furthermore, the first system section 101 includes a program unit 100L as an additional configuration.

The second system section 102 can operate independently from the first system section 101. In this embodiment, the second system section 102 includes, as functional configurations thereof, an environmental signal acquiring unit 100B, an environmental signal storage unit 100C, and a differential amount acquiring unit 100D that perform processing regarding an environmental signal fed from various sensors. The electronic apparatus 100 according to this embodiment includes an in-camera 101A, an out-camera 102A, and a microphone 103A that serve as the various sensors. The in-camera 101A is disposed on the same surface as the display section 107, typically, near an opening of the receiver 109. In this typical arrangement, it is expected that an opening of the in-camera 101A be covered with a body of a user when the user brings the opening of the receiver 109 near their ear to utilize a voice communication function. Furthermore, in this typical arrangement, the opening of the in-camera 101A is covered with a closed casing in a folded state when the electronic apparatus 100 is made up of a casing foldable through a hinge. On the other hand, the out-camera 102A is disposed on a surface different from the display section 107, typically, on a surface opposite to the display section 107. In this typical arrangement, an opening of the out-camera 102A faces outside in the folded state when the electronic apparatus 100 is made up of a casing foldable through a hinge.

The wireless communication control section 103 has a function for supplying the first system section 101 with a reception date acquired by executing a decoding process on a radio signal received with the antenna 104 and a function for outputting, from the antenna 104, a radio signal acquired by executing a modulation process on transmission data fed from the first system section 101. For example, the wireless communication control section 103 has a communication function compliant with various communication standards, such as wideband code division multiple access (W-CDMA) and CDMA 2000.

The storage section 105 includes semiconductor storage devices, such as a random access memory (RAM) and a read only memory (ROM), and portable storage media. In this embodiment, the storage section 105 includes, as functional configurations thereof, a correspondence table 100F and a destination table 100G.

The input function section 106 has a function for receiving an operation from an operator of the information processing apparatus. For example, as the input function section 106, input buttons can be arranged on the information processing apparatus or a touch panel can be arranged on the display section 107.

The display section 107, such as a liquid crystal display unit or an organic electroluminescence (EL) display unit, has a function for displaying display data supplied from the first system section 101.

The audio control section 108 has functions, such as converting audio data (e.g., digital data in a pulse code modulation (PCM) format) supplied from the first system section 101 into an analog signal and outputting the analog signal from the receiver 109 (i.e., an earpiece speaker).

An operation of the electronic apparatus 100 according to this embodiment will now be described. For example, in response to reception of an interrupt signal indicating an input operation of a user from the input function section 106, the first system section 101 of the electronic apparatus 100 activates a golf-swing measurement program serving as the program unit 100L. In a process of the activated golf-swing measurement program, the first system section 101 executes a request for registering destinations for events A and B. In the first system section 101, a process of the request receiving unit 100J receives the request for registering the destinations for the events A and B from the golf-swing measurement program and a process of the destination registering unit 100K registers information in the destination table 100G.

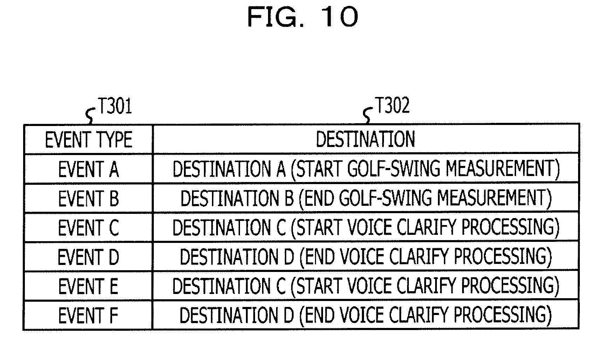

FIG. 10 illustrates an example of content of the destination table 100G in the fifth embodiment. In the example illustrated in FIG. 10, an event "event A" is registered in association with a destination "destination A (start golf-swing measurement)", whereas an event "event B" is registered in association with a destination "destination B (end golf-swing measurement)". Regarding other programs, in the example illustrated in FIG. 10, various events are registered in association with "VOICE CLARIFY PROCESSING", which is an audio processing program.

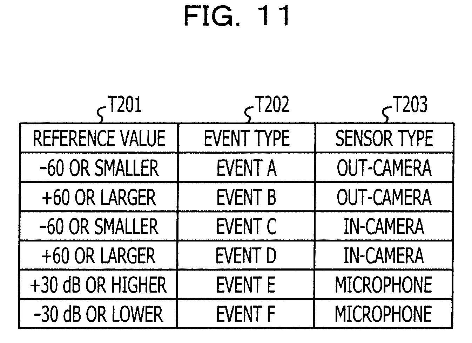

The first system section 101 also executes a process of the sensor activation control unit 100N together with the process of the destination registering unit 100K to activate a sensor relating to the destination registration request in the process. FIG. 11 illustrates an example of content of the correspondence table 100F referred to at that time. In the example illustrated in FIG. 11, a set of a reference value "-60 or smaller" and an event type "event A" and a set of a reference value "+60 or larger" and an event type "event B" are set in association with a sensor type "out-camera". Also in the example illustrated in FIG. 11, a set of a reference value "-60 or smaller" and an event type "event C" and a set of a reference value "+60 or larger" and an event type "event D" are set in association with a sensor type "in-camera". Additionally, in the example illustrated in FIG. 11, a set of a reference value "+30 dB or higher" and an event type "event E" and a set of a reference value "-30 dB or lower" and an event type "event F" are set in association with a sensor type "microphone". In accordance with the content illustrated in FIG. 11, the first system section 101 activates the out-camera 102A as the sensor relating to the destination registration request for "EVENT A" and "EVENT B".

The environmental signal acquiring unit 100B implemented in the second system section 102 of the electronic apparatus 100 receives an environmental signal (i.e., an image signal) supplied from the out-camera 102A serving as the sensor and extracts, for example, a luminance signal serving as subject information from the image signal serving as the environmental signal. The environmental signal acquiring unit 100B then supplies the environmental signal storage unit 100C and the differential amount acquiring unit 100D with the extracted luminance signal serving as the environmental signal (i.e., a first environmental signal).

The environmental signal storage unit 100C implemented in the second system section 102 stores the environmental signal for a specified period and supplies the environmental signal (i.e., a second environmental signal) to the differential amount acquiring unit 100D.

The differential amount acquiring unit 100D implemented in the second system section 102 acquires a differential amount that is a difference between the first environmental signal and the second environmental signal and supplies the first system section 101 with the differential amount regarding the environmental signal fed from the out-camera 102A.

The operation selecting unit 100E implemented in the first system section 101 receives the differential amount regarding the environmental signal fed from the out-camera 102 from the second system section 102 and compares the differential amount with the reference values "-60 or smaller" and "+60 or larger" corresponding to the sensor type "out-camera". The operation selecting unit 100E implemented in the first system section 101 selects the event type corresponding to the reference value whose relation with the differential amount satisfies a specified condition. The event information generating unit 100H implemented in the first system section 101 generates event information on the basis of the selected event type. The event sending unit 100I implemented in the first system section 101 sends the generated event information to a destination specified by the content of the destination table 100G.

With the above configuration, a user who has caused the electronic apparatus 100 to activate the golf-swing measurement program can cause the electronic apparatus 100 to start executing measurement processing regarding a specified a body motion, such as golf swing, using various sensors, such as a three-dimensional acceleration sensor, of the electronic apparatus 100 by a simple action, such as storing the electronic apparatus 100 in a pocket of their trousers. Furthermore, the user can cause the electronic apparatus 100 to stop executing the measurement processing by a simple action, such as pulling out the electronic apparatus 100 from the pocket of their trousers. In this way, the user can instruct the electronic apparatus 100 to start and stop the measurement by simple actions, whereby the electronic apparatus can record a motion that the user wants to measure as the measurement target. More specifically, in a configuration in which start and end of the measurement are instructed through a button operation or an on-screen touch operation, a motion from performance of the operation to attachment of the electronic apparatus to a measurement target is also recorded. In contrast, in this embodiment, a to-be-activated operation is selected in accordance with an amount of a change (i.e., the differential amount) in a signal fed from the sensor, which changes as time passes. Further, it is possible to effectively suppress an influence of a variation of a static level in each use environment of the electronic apparatus by focusing on the amount of the change in the environment signal.

Although the description has been given for the configuration in which the electronic apparatus 100 illustrated in FIG. 9 includes the first system section 101 and the second system section 102, the embodiment should not be limited to such a configuration. For example, in the electronic apparatus 100 illustrated in FIG. 9, one CPU may function as the first system section 101 and the second system section 102. For example, the second system section 102 may operate in cooperation with the first system section 101 instead of operating independently from the first system section 101.

The description has been given for the example of the configuration in which the first system section 101 operates as the operation selecting unit 100E, the event information generating unit 100H, the event sending unit 100I, the request receiving unit 100J, the destination registering unit 100K, the destination deleting unit 100M, the sensor activation control unit 100N, and the program unit 100L in the electronic apparatus 100 illustrated in FIG. 9. However, the embodiment should not be limited to such a configuration. For example, in the electronic apparatus 100 illustrated in FIG. 9, some or all functional units (i.e., the operation selecting unit 100E, the event information generating unit 100H, the event sending unit 100I, the request receiving unit 100J, the destination registering unit 100K, the destination deleting unit 100M, the sensor activation control unit 100N, the program unit 100L) may be executed in the second system section 102.

Although the example of the configuration has been described in which the second system section 102 operates as the environmental signal acquiring unit 100B, the environmental signal storage unit 100C, and the differential amount acquiring unit 100D in the electronic apparatus 100 illustrated in FIG. 9, the embodiment should not be limited to such a configuration. For example, in the electronic apparatus 100 illustrated in FIG. 9, some or all functional units (i.e., the environmental signal acquiring unit 100B, the environmental signal storage unit 100C, and the differential amount acquiring unit 100D) may be executed in the first system section 101. Additionally, for example, in the electronic apparatus 100 illustrated in FIG. 9, a path for acquiring an environmental signal from the microphone 103A may be connected to the audio control section 108 and the functional units (i.e., the environmental signal acquiring unit 100B, the environmental signal storage unit 100C, and the differential amount acquiring unit 100D) may be executed in the audio control section 108.

In the electronic apparatus 100 illustrated in FIG. 9, some or all functional units (i.e., the environmental signal acquiring unit 100B, the environment signal storage section 100C, the differential amount acquiring unit 100D, the operation selecting unit 100E, the event information generating unit 100H, the event sending unit 100I, the request receiving unit 100J, the destination registering unit 100K, the destination deleting unit 100M, the sensor activation control unit 100N, and the program unit 100L) may be implemented by a hardware circuit.

Although the embodiments of the present invention have been described in detail above, the present invention should not be limited to specific embodiments and can be variously modified and altered within the scope of the spirit of the present invention disclosed in the appended claims. The scope of the spirit of the present invention includes a given combination of the above-described embodiments.

The electronic apparatus including the wireless communication control section 103 serving as an example of an information processing apparatus according to embodiments of the present invention has been described in one of the above-described embodiments, the information processing apparatus is not limited to this configuration. The electronic apparatus according to embodiments of the present invention may be, for example, a portable device or a fixed device. Types of the portable device may include, for example, a mobile phone apparatus, a smartphone, a notebook personal computer, and a portable game machine. Additionally, the electronic apparatus may be a device that does not include an internal battery but operates using electric power supplied from an external power source.

All examples and conditional language recited herein are intended for pedagogical objects to aid the reader in understanding the invention and the concepts contributed by the inventor to furthering the art, and are to be construed as being without limitation to such specifically recited examples and conditions. Although the embodiment(s) of the present inventions have been described in detail, it should be understood that the various changes, substitutions, and alterations could be made hereto without departing from the scope of the invention.

## Claims

1. An electronic apparatus arranged to receive a signal from a sensor device, the electronic apparatus comprising:
an environmental signal acquiring unit arranged to acquire an environmental signal at a given sampling interval, the environmental signal being input from the sensor device;
an environmental signal storage unit arranged to store the acquired environmental signal until at least a next sampling interval comes;
a differential amount acquiring unit arranged to acquire a differential amount that is a difference between a first environmental signal and a second environmental signal, the first environmental signal being the acquired environmental signal, the second environmental signal being the environmental signal that is acquired before the first environmental signal is acquired by the environmental signal acquiring unit and is stored in the environmental signal storage unit; and
an operation selecting unit arranged to select a to-be-activated operation based on the acquired differential amount.

2. The electronic apparatus according to Claim 1, further comprising:
a correspondence table storage unit arranged to store a correspondence table in which a to-be-activated operation is defmed in association with a certain reference value,
wherein the operation selecting unit is arranged to compare the differential amount with the certain reference value indicated by the correspondence table and select, as the to-be-activated operation, the operation associated with the reference value whose relation with the differential amount satisfies a certain condition.

3. The electronic apparatus according to Claim 2,
wherein the correspondence table storage unit is arranged to store, as an alternative to the correspondence table, a second correspondence table in which an event type is defined in association with the certain reference value, the event type indicating that a relation between the certain reference value and the differential amount satisfies a certain condition, and
wherein the operation selecting unit is arranged to compare the differential amount with the certain reference value indicated by the second correspondence table instead of the correspondence table and select the event type associated with the reference value whose relation with the differential amount satisfies the certain condition,
the electronic apparatus further comprising:
a destination table storage unit arranged to store a destination table in which destination information and an event type are registered, the destination information indicating processing to be activated when a specific event is detected, the event type indicating a detection-target event;
a request receiving unit arranged to receive a registration request from a functional component executed by an arithmetic unit of the electronic apparatus, the registration request including the event type indicating the detection-target event;
a destination registering unit that is arranged to register the destination information and the event type in the destination table in response to reception of the registration request, the destination information indicating the processing to be activated when the detection-target event indicated by the registration request is detected, the event type indicating the detection-target event indicated by the registration request;
an event information generating unit arranged to generate event information based on the event type selected by the operation selecting unit, the event information indicating that the detection-target event is detected; and
an event sending unit arranged to select destination information corresponding to the event type selected by the operation selecting unit from content of the destination registration table and send the generated event information to a destination indicated by the selected destination information.

4. The electronic apparatus according to Claim 3, further comprising:
a sensor activation control unit arranged to activate a sensor device included in the electronic apparatus when the destination information associated with the detection-target event is effectively registered in the destination table.

5. The electronic apparatus according to Claim 3, further comprising:
a second sensor activation control unit arranged to stop a sensor device included in the electronic apparatus when the destination information associated with the detection-target event is not effectively registered in the destination table.

6. A computer program used in an electronic apparatus that receives a signal from a sensor device, the computer program causing a processing unit to execute:
acquiring, at sampling intervals, an environmental signal input from the sensor device;
storing the acquired environmental signal until at least a next sampling interval comes;
acquiring a differential amount that is a difference between a first environmental signal and a second environmental signal, the acquired environmental signal serving as the first environmental signal, the stored environmental signal acquired at least one sampling-interval before serving as the second environmental signal; and
selecting a to-be-activated operation based on the acquired differential amount.
